# EUROPÄISCHE PATENTSCHRIFT

(11) **EP 0 972 793 B1**
(45) Veröffentlichungstag und Bekanntmachung des Hinweises auf die Patenterteilung: **23.08.2006**
(21) Anmeldenummer: 99113019.6
(22) Anmeldetag: 06.07.1999
(51) Int. Cl.: C08K 5/00, C08K 5/37, B44C 1/10, C03C 17/10, C04B 41/88, B44C 1/14

(54) **Edelmetallpräparat und dessen Verwendung zur Herstellung von Edelmetalldekoren durch Direkt- und Indirektdruck**
Compositions containing noble metals and their use for decoration by direct or indirect printing
Compositions contenant des métaux nobles et leurs utilisations pour la décoration par impression directe ou indirecte

(30) Priorität: 11.07.1998 DE 19831141
(43) Veröffentlichungstag der Anmeldung: 19.01.2000
(73) Patentinhaber: Ferro GmbH, 60327 Frankfurt (DE)
(72) Erfinder: Schulz, Andreas, Dr., 63069 Offenbach (DE); Zimmerbeutel, Elisabeth, 63517 Rodenbach (DE); Keyn, Susanne, 60435 Frankfurt (DE); Hackett, Stephen J., GB-Stoke-on-Trent ST7 3EU, Staffordshire (GB)
(74) Vertreter: Reinhardt, Markus

(56) Entgegenhaltungen:
- EP-A- 0 514 073
- DE-A- 3 616 547
- DE-C- 4 122 131
- US-A- 4 992 098

## Beschreibung

Die Erfindung betrifft neue Edelmetallpräparate zur Herstellung von Edelmetalldekoren auf dekorbrandfähigen Substraten, wie Glas, Keramik, Bone China und Porzellan, sowie ein Verfahren zu deren Herstellung. Die Präparate eignen sich zum Direktdruck sowie zum Indirektdruck, weshalb sich die Erfindung auch auf die Verwendung des Edelmetallpräparats sowie auf ein solches Edelmetallpräparat enthaltendes Abziehbild richtet.

Es sind bereits verschiedene Edelmetallpräparate, insbesondere Goldpräparate, bekannt, die mittels Direkt- oder Indirektdruck, also mittels der Abziehbildtechnik, auf dekorbrandfähigen Substraten appliziert werden können und im Dekorbrand zu einem glänzenden oder polierfähigen Edelmetalldekor führen. Präparate, die zu glänzenden Dekoren führen, werden als Glanzgoldpräparate bezeichnet. Glanzgoldpräparate enthalten eine oder mehrere in einem organischen Medium im wesentlichen lösliche organische Edelmetallverbindungen. Typische Edelmetallverbindungen für Glanzedelmetallpräparate sind sogenannte Resinate, insbesondere aber Sulforesinate, also Thiolate von Terpenthiolen, sowie synthetische Edelmetallthiolate verschiedener anderer organischer Mercaptoverbindungen. Sogenannte Polieredelmetallpräparate, insbesondere Poliergoldpräparate, enthalten das Edelmetall in Form von im Medium löslichen und/oder unlöslichen Verbindungen, wie z.B. Goldsulfid, sowie vielfach elementare Edelmetalle in Pulverform. Üblicherweise enthalten solche Präparate auch ein oder mehrere lösliche Flußmittel, insbesondere organische Verbindungen, wie Resinate, Carboxylate und Alkoholate, insbesondere von Elementen aus der Reihe Rh, Bi, Cr, V, Ni, Co, Fe, Sn, Zr, Ta, Si, B und Al, die auf die Ausbildung des Edelmetallfilms und seine Haftung auf dem Substrat beeinflussen. Ein Medium, das sich auch in Präparaten für Abziehbilder eignet, besteht im wesentlichen aus einem oder mehreren miteinander verträglichen Bindemitteln und Lösungsmitteln für die Harze und Edelmetallverbindungen, oder es kann weitgehend lösungsmittelfrei sein und im wesentlichen aus thermoplastischen, bei Applikationstemperatur flüssigen Harzen und gegebenenfalls wachsartigen Verbindungen bestehen. Beispielhaft wird auf die US-Patente 3,092,504 und 3,163,665 , die DE-AS 14 21 865 und die EP-B 0 440 877 verwiesen.

Bei der für den Indirektdruck benötigten Abziehbilder wird auf einen Träger, insbesondere ein mit einer wasserlöslichen Leimschicht oder einer Wachsschicht versehenes Papier direkt oder auf eine Unterlageschicht eine aus dem Edelmetallpräparat bestehende oder dieses enthaltende Bildschicht aufgebracht und diese Schicht unmittelbar oder nach Aufbringen einer einen Glasfluß enthaltenden Zwischenschicht überfilmt. Beispielhaft wird auf die DE-AS 12 32 168, DE 36 16 547 C1 und DE 31 22 546 C2 verwiesen.

Obgleich die im Medium der Edelmetallpräparate enthaltenen Bindemittel beim Brand verbrennen, haben sie einen erheblichen Einfluß auf die Qualität des Dekors. Es wurde festgestellt, daß in Abhängigkeit vom verwendeten Bindemittelsystem oft zu dunkle Dekore, Dekore mit einem Glanzschleier oder/und ungenügendem Ausbrand sowie ungenügender Haftung entstehen können. Eine weitere Ursache für Dekorfehler kann darin bestehen, daß lösliche Edelmetallverbindungen beim Überfilmen aus der Bildschicht herausgelöst werden, was zu verminderter Brillanz, roten Säumen und zur Schleierbildung und/oder unscharfen Dekoren führt. Bei Abziehbildern kommen Dekorfehler durch Risse hinzu.

Zur Lösung oder Minderung der genannten Probleme wurden verschiedene Verfahren vorgeschlagen. Gemäß DE-AS 12 32 168 wurde zwischen der Bildschicht und der Überzugsschicht eine für die Überzugsschicht undurchdringliche Schutzschicht aus einem oxidierbaren oder polymerisierbaren, ein Alkyd-, Phenol-, Harnstoff- oder Epoxyharz oder trockenes Öl enthaltenden Materials angeordnet. Die zusätzliche Schicht mindert die Dekorsäume, erhöht aber den Aufwand.

Die Bildschicht der Abziehbilder gemäß DE-PS 36 16 547 basiert auf einem 8 bis 30 Gew.-% eines thermoplastischen Harzes enthaltenden Glanzedelmetallpräparats. Als thermoplastisches Harz wird ein Harz aus der Reihe Asphaltharz, Polyamidharz, Maleinatharz, Phenolharz, Ketonharz und Epoxidharz eingesetzt. Die Verwendung nur eines Harztyps führt zu qualitativ in der einen oder anderen Richtung unbefriedigenden Abziehbilder. Während, wie von den Erfindern der vorliegenden Anmeldung festgestellt wurde, ein thermoplastisches Polyamidharz zwar zu einer befriedigenden Flexibilität und Dehnbarkeit und damit Rißfreiheit der Abziehbilder führt, ist hiermit keine ausreichende Verträglichkeit mit den organischen Edelmetallverbindungen und Flußmittelverbindungen gewährleistet, mit der Folge, daß Dekorfehler, insbesondere ein ungenügender Glanz, und/oder Störungen bei der Applikation, wie insbesondere ein ungenügender Verlauf, auftreten. Maleinatharze führen zwar oft zu glänzenden, gleichzeitig aber zu ästhetisch zu dunklen Dekoren; Phenolharze führen oft zu ungenügendem Ausbrand und damit zu ungenügendem Glanz und/oder ungenügender Haftung. Das zuvor gewürdigte Dokument lehrt keine Bindemittelgemische zur Überwindung der Probleme.

Aus der DE-AS 14 21 865 ist bekannt, in Edelmetallpräparaten auch Medien mit mehr als einem Bindemittel einzusetzen, etwa ein Gemisch aus einem Kolophoniumharz und Asphaltharz. Eine solche Kombination führt aber in Abziehbildern zu Dekorfehlern, unter anderem Risse.

Ein im Handel erhältliches Glanzgoldpräparat für den Indirektdruck auf Glas und Bone China ist das Produkt GGP 1230 der Firma Heraeus. Dieses Produkt erlaubt zwar die Herstellung rißfreier und glänzender Dekore, jedoch wird die Spülmaschinenbeständigkeit, also die Haftung auf Glas, als ungenügend angesehen. Bereits nach 20 Spülgängen in einer Gläserspülmaschine treten sichtbare Dekorschädigungen auf. Auf Bone China wurde mit GGP 1230 kein glatter Goldfilm erhalten. Die Haftung von Dekoren auf verschiedenen Substraten hängt sowohl vom Flußmittelsystem als auch vom Bindemittelsystem ab. Die Zusammensetzung des Bindemittelsystems dieses Präparats ist nicht im Detail analytisch erfaßbar, jedoch machen Amidgruppen die Anwesenheit eines Polyamids wahrscheinlich. Ein weiteres Präparat - GGP 1215 / Heraeus - enthält Amidgruppen und Strukturelemente von Kolophonium; dieses Harz eignet sich zwar für Porzellan und Steingut, nicht aber für Glas.

Aufgabe der Erfindung ist, weitere Edelmetallpräparate, insbesondere Glanzgoldpräparate, bereitzustellen, die sich für die Herstellung von Abziehbildern eignen und auch auf Glas zu qualitativ hochwertigen, insbesondere hellen, glänzenden, rißfreien und gut ausbrennenden Dekoren mit verbesserter Spülmaschinenresistenz führen.

Gefunden wurde ein Edelmetallpräparat, das den Anforderungen an die Eignung für qualitativ hochwertige Abziehbilder gerecht wird, wobei der Kern in einem erfindungsgemäßen Bindemittelsystem liegt. Gegenstand der Erfindung ist damit ein Edelmetallpräparat zur Herstellung von Edelmetalldekoren auf dekorbrandfähigen Substraten, enthaltend
eine oder mehrere Edelmetallverbindungen von Au, Ag, Pd oder Pt,
ein Medium, dessen Bindemittelsystem ein Polyamid- und Kolophoniumharz enthält, und
ein oder mehrere Flußmittel,
gekennzeichnet durch ein
Bindemittelsystem aus einem Harzgemisch aus
(a) 25 bis 40 Gew.-% eines oder mehrerer Polyamidharze,
(b) 5 bis 30 Gew.-% eines oder mehrerer geschwefelten rezenten Harze, insbesondere geschwefeltem Dammarharz,
(c) 20 bis 55 Gew.-% eines oder mehrerer kolophoniummodifizierten Harze,
(d) 0 bis 30 Gew.-% eines oder mehrerer Alkylphenolharze und
(e) 0 bis 30 Gew.-% anderen Harzen, ausgenommen nicht plastifizierenden Resolen,
oder aus bei 50 bis 150 °C gebildeten Reaktionsprodukten des genannten Harzgemischs oder/und aus in Anwesenheit eines schwefelhaltigen Gelierungsmittels bei 50 bis 150 °C gebildeten Reaktionsprodukten des die Edelmetallverbindungen enthaltenden genannten Harzgemischs oder Reaktionsprodukten desselben.

Die Unteransprüche richten sich auf bevorzugte Ausführungsformen des Edelmetallpräparats. Gemäß einer bevorzugten Ausführungsform, und diese ist zur Herstellung silberhaltiger Goldfilme besonders zweckmäßig, werden außer dem geschwefelten rezenten Harz und dem Polyamidharz entweder mindestens zwei unterschiedliche kolophoniummodifizierte Harze im Gewichtsverhältnis von 10 zu 1 bis 1 zu 10 oder mindestens ein kolophoniummodifiziertes Harz und ein Alkylphenolharz im Gewichtsverhältnis von 10 zu 1 bis 1 zu 1 als Bindemittel eingesetzt.

Gemäß einer weiteren bevorzugten Ausführungsform besteht das Bindemittelsystem aus einem Harzgemisch, 27 bis 55 Gew.-% eines oder mehrerer kolophoniummodifizierten Harze, 7 bis 20 Gew.-% geschwefeltem Dammarharz, 27 bis 37 Gew.-% Polyamidharz und 0 bis 30 Gew.-% Alkylphenolharz, wobei in einem zwei kolophoniummodifizierte Harze enthaltenden Bindemittelsystem diese Harze im Gewichtsverhältnis von 5 zu 1 bis 1 zu 5 und in einem ein kolophoniummodifiziertes Harz und ein Alkylphenolharz enthaltenden Bindemittelsystem diese Harze im Gewichtsverhältnis 4 zu 1 bis 1 zu 1 anwesend sind, oder/und aus in An- oder Abwesenheit eines schwefelhaltigen Geliermittels gebildeten Reaktionsprodukten des genannten Harzgemischs.

Ein weiterer Gegenstand ist ein Abziehbild, dessen dekorbildende Schicht unter Verwendung des erfindungsgemäßen Edelmetallpräparats erzeugt wurde. Das Edelmetallpräparat läßt sich durch ein übliches Direktdruckverfahren oder durch Indirektdruck, also unter Verwendung des das Präparat in der Bildschicht enthaltenden Abziehbilds, auf ein dekorbrandfähiges Substrat, wie Glas, Keramik, Porzellan, Bone China und andere silikatische Materialien applizieren und unter üblichen Bedingungen darauf einbrennen, wobei qualitativ hochwertige Dekore erhalten werden.

Bei den erfindungsgemäßen Edelmetallpräparaten kann es sich um Glanzedelmetalle oder Polieredelmetallpräparate handeln. Bevorzugt sind Glanzpräparate, insbesondere Glanzgoldpräparate, welche außer einer oder mehreren Goldverbindungen Verbindungen von Silber und/oder Platin oder Palladium zur Farbmodifizierung enthalten. Glanzgoldmetallpräparate enthalten üblicherweise 6 bis 15 Gew.-% Edelmetalle in Form von im Medium löslichen organischen, insbesondere schwefelhaltigen Verbindungen, wie Sulforesinaten und anderen Thiolaten. Poliergoldpräparate enthalten alternativ oder zusätzlich zu organischen löslichen Goldverbindungen anorganische unlösliche Edelmetallverbindungen und/oder elementares Edelmetall; der Goldgehalt derartiger Polierpräparate liegt im allgemeinen im Bereich von 15 bis 40 Gew.-%.

Das Medium erfindungsgemäßer Präparate kann lösungsmittelhaltig oder lösungsmittelfrei sein. Im ersten Fall beträgt der Bindemittelgehalt üblicherweise 15 bis 25 Gew.-%, im zweiten Fall meistens 20 bis 45 Gew.-%. Die Viskosität der Präparate läßt sich außer durch die Harzkombination durch die Menge und Art eines oder mehrerer Lösungsmittel und/oder durch eine thermische Behandlung der Bindemittelkombination und/oder durch eine Gelierung des Edelmetallverbindungen enthaltenden Mediums in Gegenwart eines schwefelhaltigen Geliermittels bei erhöhter Temperatur einstellen. Zur Herstellung von Siebdruckpasten wird vorzugsweise das Gemisch aus den einzelnen Bindemitteln oder einem thermisch vorbehandelten Gemisch derselben in Gegenwart der dekorbildenden Edelmetallverbindungen und eines schwefelhaltigen Geliermittels geliert. Unter Gelierung wird hierbei eine Vernetzung verstanden, die aber einen Siebdruck noch ermöglicht.

Das erfindungsgemäße Bindemittelsystem enthält mindestens drei, bevorzugt jedoch vier Harze aus den vorgenannten Klassen in anspruchsgemäßer Menge. Erst die Kombination macht es möglich, ein für Abziehbilder geeignetes Präparat mit hoher Dekorqualität zu erhalten. Das oder die Polyamidharze tragen wesentlich zur Elastizität und Flexibilität und damit Rißfreiheit der Dekorschicht in Abziehbildern bei. Die Nachteile der Polyamidharze werden durch die anderen Harze behoben. Hier kommt dem geschwefelten Naturharz bezüglich der Glanzbildung überraschend große Bedeutung zu. Während eine Kombination je eines Harzes (a), (b) und (c) bei silberfreien Golddekoren zu akzeptablen Dekorresultaten führt, besteht bei silberhaltigen Golddekoren die Gefahr von zu dunklen und/oder ungenügend ausbrennenden Dekoren. Überraschenderweise gelingt es, durch Verwendung einer Kombination von zwei unterschiedlichen Kolophoniumharzen (c) oder ein Kolophoniumharz in Verbindung mit einem Alkylphenolharz (d), die genannten Probleme zu überwinden.

Zweckmäßigerweise enthält das Bindemittelsystem die beiden Harze im zuvor genannten Gewichtsverhältnis.

Außer aus der genannten Harzkombination kann das Bindemittelsystem auch die genannten Harze in der genannten Menge in Form von bei der Herstellung des Präparats bei 50 bis 150 °C, insbesondere 80 ibs 140 °C, gebildeten Reaktionsprodukten bestehen. Derartige Reaktionsprodukte können insbesondere beim Einsatz von reaktiven Alkylphenolharzen entstehen.

Gemäß der für siebdruckfähige Edelmetallpräparate bevorzugten Alternative handelt es sich bei dem Bindemittelsystem um Reaktionsprodukte, wie sie aus der vorgenannten Harzkombination in Gegenwart eines schwefelhaltigen Gelierungsmittels und der Edelmetallverbindungen bei 50 bis 150 °C gebildet werden können. Als Gelierungsmittel können Mittel eingesetzt werden, wie sie aus der Gummi-Vulkanisation bekannt sind, Beispiele sind Schwefel, Polysulfide, organische Di- und Oligosulfide, Sulfenamide, Dithiocarbaminate, besonders bevorzugt wird Dithio-4,4'-dimorpholin. Die Einsatzmenge Schwefelungsmittel liegt üblicherweise im Bereich von 0,1 bis 3 Gew.-%. Bei der zweckmäßigerweise in Gegenwart des Lösungsmittels durchgeführten Gelierung steigt die Viskosität des Präparats an. Vermutlich kommt es zur S-Brückenbildung zwischen Bestandteilen des schwefelhaltigen Bindemittelsystems und/oder mit den schwefelhaltigen Edelmetallverbindungen. Durch die Gelierung wird das erforderliche Viskositätsverhalten erzielt; zudem werden die Lagerstabilität des Präparats und das Einbrennverhalten verbessert.

Unter den Alkylphenolharzen werden solche Alkylphenol-Formaldehyd-Harze verstanden, deren para-, gegebenenfalls auch meta-Stellung im Phenol alkylsubstituiert ist, insbesondere mit einer tert.-Butyl-, Diisobutyl- oder Phenylgruppe, so daß diese Harze nicht oder in geringerem Umfang vernetzen. Die Harze wiesen ein Erweichungspunkt im Bereich von 40 bis 120 °C auf und sind in Benzinkohlenwasserstoffen löslich oder verdünnbar. In Betracht kommen Harze, wie sie in Kittel "Lehrbuch der Lacke und Beschichtungen" (1961), Band I.1, Seiten 341-346 beschrieben sind.

Unter den Polyamidharzen sind solche geeignet, wie sie als Lackharze und Schmelzkleber Verwendung finden. Der Erweichungspunkt der Polyamidharze liegt insbesondere im Bereich von 50 bis 150 °C, bevorzugt im Bereich von 80 bis 120 °C. Es handelt sich im allgemeinen um aliphatische Polyamide mit Strukturelementen einer Dicarbonsäure und/oder eines Diamins mit mehr als 8 C-Atomen; bevorzugte Dicarbonsäurekomponente in den Polyamiden sind Dimer-Fettsäuren.

Bei den geschwefelten rezenten Harzen handelt es sich um geschwefelte Harze lebender Bäume. Einige dieser Naturharze weisen Terpenstrukturen auf. Geschwefelte Harze auf der Basis von Sesquiterpenen, Di- und insbesondere Triterpenen werden bevorzugt. Bei der Schwefelung der Terpenharze nehmen diese in Form von Thioetherbrücken, Di- und Oligosulfidbindungen und Thiolgruppen teilweise erhebliche Mengen Schwefel auf. Erfindungsgemäß zu verwendende geschwefelte Harze enthalten bevorzugt 5 bis 20 Gew.-% Schwefel. Besonders bevorzugt wird geschwefeltes Dammarharz mit einem S-Gehalt von 5 bis 20 Gew.-%, bevorzugt 8 bis 12 Gew.-%.

Geeignete kolophoniummodifizierte Harze sind solche, die als Lackharze Anwendung finden. Derartige Harze weisen ein Erweichungspunkt im Bereich von 50 bis 160 °C, insbesondere 80 bis 140 °C auf. Es handelt sich beispielsweise um Glycerinester von Kolophonium, Ester von primären zwei- bis sechswertigen Alkoholen, wie Pentaerythrit, Trimethylolpropen, Trimethylolethan, Dipentaerythrit und Neopentylglykol, mit Kolophonium, Glycerin- und Pentaerythritester von maleinsäuremodifiziertem Kolophonium sowie kolophoniummodifizierte Phenolharze. Beispiele für solche Harze sowie deren Alkoholkomponente, Säurezahl, Farbe und Löslichkeit können gängigen Lacktabellen entnommen werden (beispielsweise Karsten, Lackrohstofftabellen (1987) 8. Auflage, Curt R. Vincentz Verlag, Hannover).

Bei der Auswahl der Harzbestandteile im Rahmen dieser Erfindung wird der Fachmann durch orientierende Vorversuche sicherstellen, daß die Komponenten untereinander verträglich und im gewählten Lösungsmittelsystem löslich sind. Diese Testung ist insbesondere dann nötig, wenn in solchen Präparaten zusätzlich andere Harze (e) mitverwendet werden. Während unter den fakultativ anwesenden anderen Harzen, beispielsweise Asphaltharze, den Ausbrand nicht stören, haben sich nicht-plastifizierende Resole als ungeeignet erwiesen.

Lösungsmittelhaltige Präparate enthalten im allgemeinen 10 bis 40 Gew.-% eines oder mehrerer Lösungsmittel. Geeignet sind aliphatische, cycloaliphatische, aromatische Kohlenwasserstoffe, insbesondere alkylierte Aromaten und Terpenkohlenwasserstoffe, Ketone, Alkohole und Ether. Der Siedepunkt der Lösungsmittel liegt zweckmäßigerweise oberhalb 110 °C, insbesondere im Bereich von etwa 140 bis 230 °C. Vorzugsweise enthält das Präparat mehr als ein Lösungsmittel, etwa ein Gemisch aus einem Alkylaromaten, einem Alkylcycloaliphaten, einem carbocyclischen Keton und Alkohol.

Lösungsmittelfreie oder zumindest lösungsmittelarme (weniger als 10 Gew.-%) Präparate enthalten zur Einstellung optimaler Druckeigenschaften zweckmäßigerweise wachsartige Verbindungen, etwa als Lösungsvermittler, Einstellung des Erweichungspunktes und Viskosität-Temperaturverhalten. Geeignete Stoffe sind Polyolefinwachse, Fettalkohole, Fettamide und Polyalkylenglykole. Erfindungsgemäße Präparate können zusätzlich übliche Weichmacher, wie Dibutylphthalat, enthalten.

Die Herstellung der Präparate umfaßt ein Abmischen und Homogenisieren der Bindemittel. Zweckmäßigerweise werden die einzelnen Harze bei 50 bis 150 °C unter Rühren hintereinander miteinander in Kontakt gebracht, wobei im Falle lösungsmittelhaltiger Systeme Lösungsmittel anwesend sein können. Gemäß einer bevorzugten Ausführung werden ein geschwefeltes rezentes Harz, etwa geschwefeltes Dammarharz, und ein oder mehrere kolophoniummodifizierte Harze in einem alkylaromatischen Lösungsmittel bei 80 bis 140 °C bis zur Homogenität gerührt, anschließend wird, soweit anwesend, das Alkylphenolharz zugegeben und erneut homogenisiert und zuletzt das Polyamidharz eingetragen und bei der genannten Temperatur homogenisiert. In das Bindemittelsystem werden die Edelmetallverbindungen eingetragen. Sofern erwünscht, und dies entspricht einer besonders bevorzugten Ausführung für siebdruckfähige Pasten, wird das Gemisch mit 0,1 bis 3 Gew.-%, insbesondere 0,5 bis 2 Gew.-%, eines schwefelhaltigen Gelierungsmittels bei 50 bis 150 °C, vorzugsweise 80 bis 140 °C, geliert. Die Einsatzmenge an Schwefelungsmittel richtet sich nach der gewünschten Verarbeitungsviskosität. Präparate mit niedrigem Bindemittelgehalt machen einen erhöhten Einsatz an Schwefelungsmittel zweckmäßig. Bei dieser Gelierung werden schwefelbare Bestandteile der Bindemittel und/oder des Edelmetallthiolats über Sulfid-, Disulfid- oder Oligosulfidbrücken vernetzt. Schwefelbar sind solche Bindemittel, welche ungesättigt sind und/oder bereits teilweise geschwefelt sind. Die Flußmittel können vor oder nach der thermischen Behandlung mit einem Schwefelungsmittel zugegeben werden. Die erfindungsgemäßen Präparate enthalten in allgemein üblicher Menge ein oder mehrere dem Fachmann bekannte Flußmittel. Üblicherweise sind als Flußmittel organische Verbindungen von Rh, Cr und Bi anwesend, häufig aber zusätzlich weitere Verbindungen, etwa solche von Si, Al, Co, Ni, Sn, Ta, Ti.

Die erfindungsgemäßen Präparate lassen sich zur Herstellung von Abziehbildern verwenden. Derartige Abziehbilder umfassen eine Trägerunterlage mit einer üblichen wasserlöslichen oder thermisch erweichenden Trennschicht, eine dekorbildende Schicht aus dem erfindungsgemäßen Edelmetallpräparat und eine filmbildende Überzugsschicht aus einem üblichen Filmbildner, etwa einem Methacrylatharz. Die Abziehbilder können zusätzlich eine zwischen der Trennschicht und Bildschicht angeordnete Unterlageschicht und/oder eine zwischen der Bildschicht und Überzugsschicht angeordnete Deckschicht aufweisen. Bei der Unterlageschicht kann es sich um eine Oxide und/oder Glasfritte enthaltende Schicht handeln, wodurch die Haftung verbessert und/oder matte Dekore erhältlich sind (siehe z.B. DE-PS 31 22 546). Bei der Deckschicht handelt es sich beispielsweise um eine Glasfritte enthaltende Schicht, wodurch abriebfeste Dekore erhältlich sind (siehe z.B. DE-PS 36 16 547). Die Bildschicht wird in üblicher Weise appliziert, vorzugsweise mittels Siebdruck.

Sowohl das erfindungsgemäße Edelmetallpräparat als auch das ein solches Präparat enthaltende Abziehbild lassen sich in bekannter Weise zur Herstellung von edelmetallischen Dekoren auf dekorbrandfähigen Substraten verwenden. Beim Direktdruck lassen sich übliche Druckverfahren heranziehen, wie Siebdruck und Tampondruck. Selbstverständlich ist auch die Applikation des Präparats durch Pinseln oder mittels einer Rändermaschine möglich. Substrate für den Direkt- und Indirektdruck sind beispielsweise Glas, Keramik, Bone China und Porzellan. Das auf den Träger aufgebrachte Dekor wird in bekannter Weise unter auf das Substrat abgestimmten Brennbedingungen eingebrannt.

Die Verwendung der erfindungsgemäßen Präparate mittels Direktdruck oder Indirektdruck führt zu qualitativ hochwertigen Dekoren. Glanzpräparate führen zu hellen, glänzenden und rißfreien Dekoren. Die nachfolgenden Beispiele verdeutlichen die Erfindung.

### Beispiele

### Herstellung der Präparate (allgemeine Vorschrift)

Eine 50 gew.-%ige Lösung von geschwefeltem Dammarharz in einem Gemisch aus Pineöl und Toluol mit einem S-Gehalt der Lösung von 9,1 % (= gD) und das oder die Kolophoniumharz(e) aus der Reihe der Glycerinester von Kolophonium (= K₁; Erweichungspunkt 90 °), Pentaerythritester von Kolophonium (= K₂; Erweichungsbereich 113 bis 123 °C) und Glycerinester von maleinsäuremodifiziertem Kolophonium (= K₃; Erweichungspunkt 142 °C) wurden in Gegenwart eines alkylaromatischen Lösungsmittels bei 125 °C homogenisiert. Anschließend wurde, soweit anwesend, ein Alkylphenolharz mit einem Schmelzbereich von 50 bis 60 °C (= APH) und in den Beispielen 12 und 15 ein nicht plastifizierendes Resol mit einem Schmelzbereich von 45 bis 55 °C (= PH) zugegeben und bei 125 °C homogenisiert. Schließlich wurde ein Polyamidharz auf der Basis eines Fettsäuredimers mit einem Erweichungspunkt von etwa 100 °C (= PA) bei der gleichen Temperatur in das System eingearbeitet. Bei der gewählten Temperatur konnten reaktive Gruppen der Harze miteinander reagieren. Zum Bindemittelsystem wurden die Edelmetallverbindungen sowie Flußmittel und, sofern notwendig, weitere Lösungsmittel zugefügt.

Da die Herstellung der Präparate der in der Tabelle angegebenen Beispiele eine Gelierung umfaßte, erfolgte diese vor Zugabe der Flußmittel, indem zum die dekorbildenden Edelmetallverbindungen enthaltenden, wie oben angegeben hergestellten Bindemittelsystem das Gelierungsmittel Di-4,4'-morpholino-disulfid zugegeben und die Gelierung bei 110 bis 120 °C innerhalb von 5 bis 90 Minuten durchgeführt wurde. In den Beispielen 2 bis 15 wurden 1,07 g, in Beispiel 16 1,00 g, in Beispiel 17 0,79 g und in den Beispielen 18 bis 21 1,04 g Di-4,4'-morpholino-disulfid eingesetzt.

In den Beispielen wurden die in der Tabelle angegebenen Flußmittelkombinationen A, B oder C eingesetzt, welche folgende Metalle in Form von Resinaten enthielten (Gew.-%)
A: 0,03 Rh; 0,08 Bi; 0,03 Zr; 0,01 B; 0,008 Cr; 0,04 Co; 0,04 V; 0,02 Ta.
B: 0,03 Rh; 0,05 Si; 0,04 Cu; 0,02 B; 0,04 Bi; 0,03 Zr; 0,10 S; 0,06 V.
C: 0,06 Rh; 0,03 Si; 0,06 Ni.

Die lösungsmittelhaltigen Präparate enthielten zusätzlich zum Pineöl des geschwefelten Dammars Alkylaromaten, Cyclohexanon, Benzylalkohol und Methylcyclohexanol im Verhältnis von etwa 3 : 3 : 2 : 1. Die Druckviskosität der Paste lag im Bereich von 2000 bis 10.000 mPa·s. Der Lösungsmittelgehalt des thermoplastischen Präparates (= Beispiel 20) lag unter 10 %; das Präparat enthielt jedoch C₁₆-C₁₈-Fettalkohole, um die Druckviskosität einzustellen.

Die Beispiele 2 bis 17 - erfindungsgemäß und nichterfindungsgemäß - wurden unter Einsatz eines Goldsulforesinats (50 % Au) durchgeführt; der Au-Gehalt der Präparate betrug jeweils 9,8 Gew.-%. Die Präparate der Beispiele 2 bis 16 enthielten zusätzlich 5 Gew.-% eines Silbermercaptids (20 % Ag). Die Beispiele 17 bis 19 enthielten nur das Goldsulforesinat als dekorbildende Edelmetallverbindung (Au-Gehalt 98 %). Das Poliergoldpräparat enthielt das Sulforesinat in üblicher Menge (= 9,8 % Au) und zusätzlich elementares Au-Pulver - gesamter Au-Gehalt 26 %. Die Beispiele 2 bis 15 enthielten zusätzlich 3,3 Gew.-% Dibutylphthalat, die Beispiele 1 bis 11 zusätzlich 3,3 Gew.-% Kampher.

Zum Indirektdruck wurden in üblicher Weise Abziehbilder hergestellt und diese appliziert. Die Druckpaste wurde mittels Siebdruck auf Metapapier aufgetragen, getrocknet und dann mit einer handelsüblichen Filmlösung (80450 der Firma Cerdec AG) überfilmt. Der Direktdruck (Beispiele 10i und 11i sowie 20) erfolgte durch Siebdruck. Der Direktdruck des thermoplastischen Präparats des Beispiels 20 erfolgte mittels eines beheizten Siebes.

Brennbedingungen auf Glas: Aufheizung in 1 h auf 600 °C, 15 min. Haltezeit, Abkühlen 1 h auf 25 °C.

Brennbedingungen auf Bone China (BC) (Beispiele 17 bis 19): 250 °C/min., Aufheizrate bis 780 °C, 45 min. Haltezeit, abkühlen. Auf Porzellan (Beispiel 17): 400 °C/h Aufheizrate, 10 min. Haltezeit bei 820 °C.

Brennbedingungen für das Poliergoldpräparat (Beispiel 21), das eine Glasfritte und einen rhodiumhaltigen Hochtemperatur-Schnellbrandfluß enthielt: Aufheizrate 2400 °C/h, Haltezeit 1 min.

Details zur Zusammensetzung der Bindemittelsysteme, dekorbildenden Edelmetalle im Präparat sowie Brennergebnisse beim Indirektdruck und zum Teil Direktdruck auf Glas, Bone China und Porzellan sind der Tabelle zu entnehmen. Soweit nicht anders angegeben, wurde im Indirektdruck appliziert.

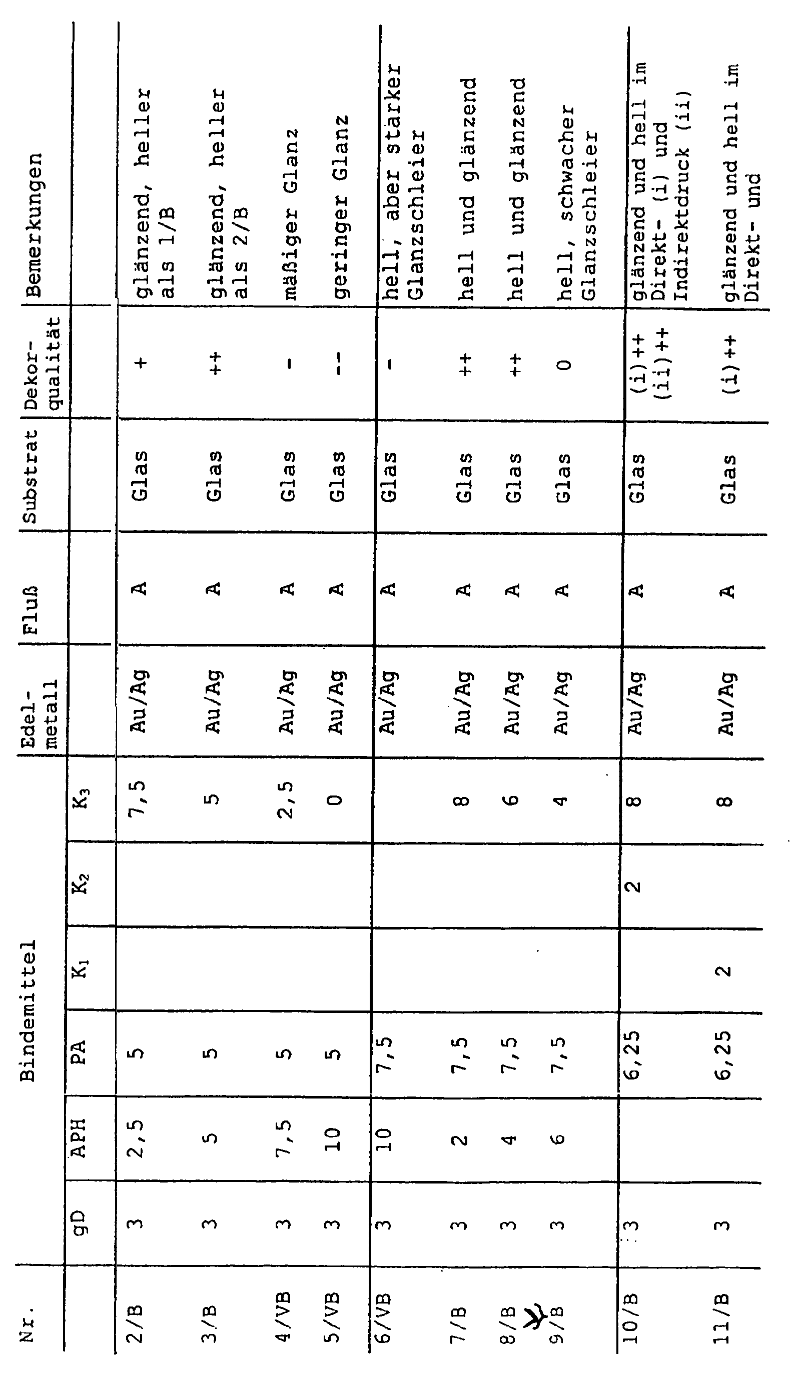

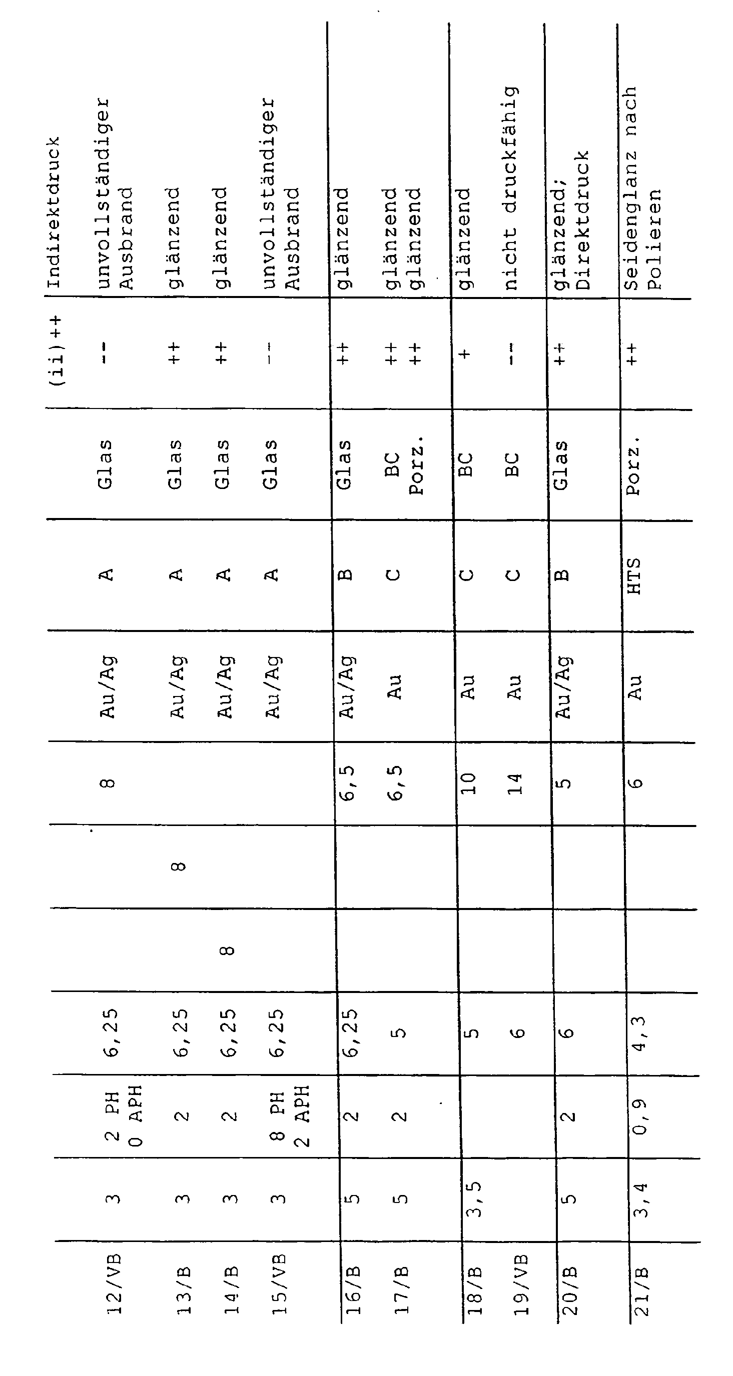

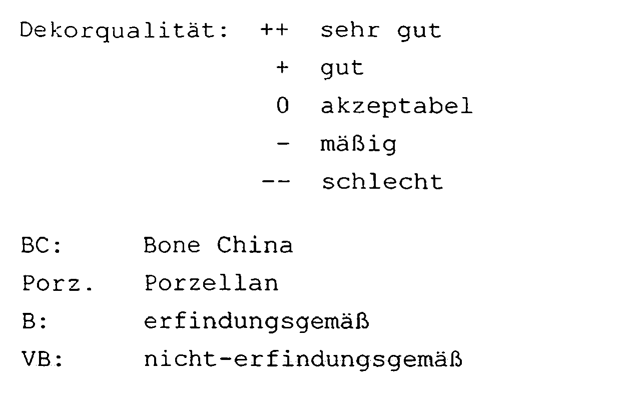

Die Versuchsergebnisse zeigen, daß anspruchsgemäße Bindemittelsysteme enthaltende Präparate die Herstellung qualitativ hochwertiger Dekore erlauben.

## Patentansprüche

1. Edelmetallpräparat zur Herstellung von Edelmetalldekoren auf dekorbrandfähigen Substraten, enthaltend
eine oder mehrere Edelmetallverbindungen von Au, Ag, Pd oder Pt,
ein Medium, dessen Bindemittelsystem ein Polyamid- und Kolophoniumharz enthält, und
ein oder mehrere Flußmittel,
**gekennzeichnet durch** ein
Bindemittelsystem aus einem Harzgemisch aus
(a) 25 bis 40 Gew.-% eines oder mehrerer Polyamidharze,
(b) 5 bis 30 Gew.-% eines oder mehrerer geschwefelten rezenten Harze, insbesondere geschwefeltem Dammarharz,
(c) 20 bis 55 Gew.-% eines oder mehrerer kolophoniummodifizierten Harze,
(d) 0 bis 30 Gew.-% eines oder mehrerer Alkylphenolharze und
(e) 0 bis 30 Gew.-% anderen Harzen, ausgenommen nicht plastifizierenden Resolen,
oder aus bei 50 bis 150 °C gebildeten Reaktionsprodukten des genannten Harzgemischs oder/und aus in Anwesenheit eines schwefelhaltigen Gelierungsmittels bei 50 bis 150 °C gebildeten Reaktionsprodukten des die Edelmetallverbindungen enthaltenden genannten Harzgemischs oder Reaktionsprodukten desselben.

2. Edelmetallpräparat nach Anspruch 1,
**dadurch gekennzeichnet,**
**daß** im Bindemittelsystem entweder mindestens zwei unterschiedliche kolophoniummodifizierte Harze im Gewichtsverhältnis von 10 zu 1 bis 1 zu 10 oder mindestens ein kolophoniummodifiziertes Harz und ein Alkylphenolharz im Gewichtsverhältnis von 10 zu 1 bis 1 zu 1 anwesend sind.

3. Edelmetallpräparat nach Anspruch 1 oder 2,
**dadurch gekennzeichnet,**
**daß** das die Edelmetallverbindungen und die Harze oder das Reaktionsgemisch derselben enthaltende Gemisch mittels 0,1 bis 3 Gew.-%, bezogen auf das Präparat, eines schwefelhaltigen Geliermittels geliert wurde.

4. Edelmetallpräparat nach einem der Ansprüche 1 bis 3,
**dadurch gekennzeichnet,**
**daß** es 10 bis 40 Gew.-% Lösungsmittel mit einem Siedepunkt oberhalb 110 °C aus der Reihe aromatischer und cycloaliphatischer Kohlenwasserstoffe, insbesondere alkylierter Aromaten und Terpene, Ketone, Alkohole und Ether enthält.

5. Edelmetallpräparat nach einem der Ansprüche 1 bis 4,
**dadurch gekennzeichnet,**
**daß** es 10 bis 30 Gew.-% Wachse aus der Reihe der Fettalkohole, Fettamide, Polyolefinwachse und Polyalkylenglykole und weniger als 10 Gew.-% organische Lösungsmittel enthält.

6. Edelmetallpräparat nach einem der Ansprüche 1 bis 5,
**dadurch gekennzeichnet,**
**daß** es als geschwefeltes rezentes Harz geschwefeltes Dammarharz enthält und das/die kolophoniummodifizierte(n) Harz(e) ausgewählt ist (sind) aus der Reihe der Glycerin- oder Pentaerythritester von Kolophonium oder Glycerinester von maleinsäuremodifiziertem Kolophonium.

7. Edelmetallpräparat nach einem der Ansprüche 1 bis 6,
**dadurch gekennzeichnet,**
**daß** das Bindemittelsystem aus einem Harzgemisch, 27 bis 55 Gew.-% eines oder mehrerer kolophoniummodifizierten Harze, 7 bis 20 Gew.-% geschwefeltem Dammarharz, 27 bis 37 Gew.-% Polyamidharz und 0 bis 30 Gew.-% Alkylphenolharz besteht, wobei in einem zwei kolophoniummodifizierte Harze enthaltenden Bindemittelsystem diese Harze im Gewichtsverhältnis von 5 zu 1 bis 1 zu 5 und in einem ein kolophoniummodifiziertes Harz und ein Alkylphenolharz enthaltenden Bindemittelsystem diese Harze im Gewichtsverhältnis 4 zu 1 bis 1 zu 1 anwesend sind, oder/und aus in An- oder Abwesenheit eines schwefelhaltigen Geliermittels gebildeten Reaktionsprodukten des genannten Harzgemischs.

8. Edelmetallpräparat nach einem der Ansprüche 1 bis 7,
**dadurch gekennzeichnet,**
**daß** das ein oder mehrere lösliche organische Edelmetallverbindung(en) enthaltende Medium vor oder nach Zugabe des/der Flußmittel(s) in Gegenwart von 0,1 bis 3 Gew.-%, bezogen auf das Präparat, eines oder mehrerer Gelierungsmittels aus der Reihe der Sulfenamide, Dithioamide oder einer anderen organischen Verbindung mit einer Di-, Tri- oder Tetrasulfidbrücke bei einer Temperatur von 50 bis 150 °C 5 bis 90 Minuten geliert wurde.

9. Edelmetallpräparat nach einem der Ansprüche 1 bis 7,
**dadurch gekennzeichnet,**
**daß** es als Edelmetallverbindungen im wesentlichen lösliche Goldverbindungen aus der Reihe der Resinate, Sulforesinate, Thiolate und Dithiolate enthält.

10. Verfahren zur Herstellung eines Edelmetallpräparats gemäß einem der
Ansprüche 1 bis 9,
umfassend Mischen von einer oder mehreren Edelmetallverbindungen von Au, Ag, Pd oder Pt mit einem ein Bindemittelsystem umfassenden lösungsmittelhaltigen oder lösungsmittelfreien und flussmittelhaltigen Mediums,
**dadurch gekennzeichnet,**
**dass** man ein Bindemittelsystem einsetzt, das aus einem Harzgemisch aus
(a) 25 bis 40 Gew.-% eines oder mehrerer Polyamidharze,
(b) 5 bis 30 Gew.-% eines oder mehrerer geschwefelten Terpenharze, insbesondere geschwefeltem Dammarharz,
(c) 20 bis 55 Gew.-% eines oder mehrerer kolophoniummodifizierten Harze,
(d) 0 bis 30 Gew.-% eines oder mehrerer Alkylphenolharze und
(e) 0 bis 30 Gew.-% anderen Harzen, ausgenommen nicht plastifizierenden Resolen, oder aus bei 50 bis 150 °C gebildeten Reaktionsprodukten des genannten Harzgemischs oder/und aus in Anwesenheit eines schwefelhaltigen Gelierungsmittels bei 50 bis 150 °C gebildeten Reaktionsprodukten des die Edelmetallverbindungen enthaltenden genannten Harzgemischs besteht.

11. Abziehbild zur Herstellung eines Edelmetalldekors auf dekorbrandfähigen Substraten, umfassend eine Trägerunterlage, eine dekorbildende Schicht und eine filmbildende Überzugsschicht,
**dadurch gekennzeichnet,**
**daß** die dekorbildende Schicht unter Verwendung eines Edelmetallpräparats gemäß einem der Ansprüche 1 bis 9 erzeugt wurde.

12. Verwendung des Edelmetallpräparats gemäß einem der Ansprüche 1 bis 9 zur Herstellung von Edelmetalldekoren auf dekorbrandfähigen Substraten durch Direktdruck oder unter Verwendung des Abziehbilds gemäß Anspruch 11 durch Indirektdruck.

## Claims

1. Noble metal preparation for the production of noble metal decorations on decoratively fireable substrates,
containing
one or more noble metal compounds of Au, Ag, Pd or Pt,
a medium, the binder system of which contains a polyamide resin and rosin resin, and
one or more fluxing agents,
**characterised by** a
binder system consisting of a resin mixture consisting of
(a) 25 to 40 %w/w of one or more polyamide resins,
(b) 5 to 30 %w/w of one or more sulphurised recent resins, in particular sulphurised dammar resin,
(c) 20 to 55 %w/w of one or more rosin-modified resins,
(d) 0 to 30 %w/w of one or more alkylphenol resins and
(e) 0 to 30 %w/w of other resins, except non-plasticising resols,
or of reaction products formed at 50 to 150°C of the resin mixture cited and/or of reaction products formed in the presence of a sulphur-containing gelling agent at 50 to 150°C, of the resin mixture cited containing the noble metal compounds or reaction products of the same.

2. Noble metal preparation according to claim 1,
**characterised in that**
in the binder system either at least two different rosin-modified resins in a ratio by weight of 10 to 1 to 1 to 10 or at least a rosin-modified resin and an alkylphenol resin in a ratio by weight of 10 to 1 to 1 to 1 are present.

3. Noble metal preparation according to claim 1 or 2,
**characterised in that**
the mixture containing the noble metal compounds and the resins or the reaction mixture of the same has been gelled by means of 0.1 to 3 %w/w, based on the preparation, of a sulphur-containing gelling agent.

4. Noble metal preparation according to one of claims 1 to 3,
**characterised in that**
it contains 10 to 40 %w/w solvent with a boiling point above 110°C from the series of aromatic and cycloaliphatic hydrocarbons, in particular alkylated aromatics and terpenes, ketones, alcohols and ethers.

5. Noble metal preparation according to one of claims 1 to 4,
**characterised in that**
it contains 10 to 30 %w/w waxes from the series of fatty alcohols, fatty amides, polyolefin waxes and polyalkylene glycols and less than 10 %w/w organic solvents.

6. Noble metal preparation according to one of claims 1 to 5,
**characterised in that**
it contains sulphurised dammar resin as sulphurised recent resin and the rosin-modified resin(s) is (are) selected from the series of the glycerol or pentaerythritol esters of rosin or glycerol esters of maleic acid-modified rosin.

7. Noble metal preparation according to one of claims 1 to 6,
**characterised in that**
the binder system consists of a resin mixture, 27 to 55 %w/w of one or several rosin-modified resins, 7 to 20 %w/w sulphurised dammar resin, 27 to 37 %w/w polyamide resin and 0 to 30 %w/w alkylphenol resin, wherein, in a binder system containing two rosin-modified resins, these resins are present in a ratio by weight of 5 to 1 to 1 to 5 and in a binder system containing a rosin-modified resin and an alkylphenol resin these resins are present in a ratio by weight of 4 to 1 to 1 to 1, or/and of reaction products of the resin mixture cited formed in the presence or absence of a sulphur-containing gelling agent.

8. Noble metal preparation according to one of claims 1 to 7,
**characterised in that**
the medium containing one or more soluble organic noble metal compound(s) has been gelled before or after addition of the fluxing agent(s) in the presence of 0.1 to 3 %w/w, based on the preparation, of one or more gelling agents from the series of sulphenamides, dithioamides or another organic compound with a di-, tri- or tetrasulphide bridge at a temperature of 50 to 150°C for 5 to 90 minutes.

9. Noble metal preparation according to one of claims 1 to 7,
**characterised in that**
it contains, as noble metal compounds, substantially soluble gold compounds from the series of resinates, sulphoresinates, thiolates and dithiolates.

10. Process for the production of a noble metal preparation according to one of claims 1 to 9, comprising mixing one or more noble metal compounds of Au, Ag, Pd or Pt with a solvent-containing or solvent-free and fluxing agent-containing medium comprising a binder system,
**characterised in that**
a binder system which consists of a resin mixture consisting of
(a) 25 to 40 %w/w of one or more polyamide resins,
(b) 5 to 30 %w/w of one or more sulphurised terpene resins, in particular sulphurised dammar resin,
(c) 20 to 55 %w/w of one or more rosin-modified resins,
(d) 0 to 30 %w/w of one or more alkylphenol resins and
(e) 0 to 30 %w/w of other resins, except non-plasticising resols
or of reaction products formed at 50 to 150°C of the resin mixture cited or/and of reaction products formed in the presence of a sulphur-containing gelling agent at 50 to 150°C of the resin mixture cited containing noble metal compounds, is used.

11. Transfer for the production of a noble metal decoration on decoratively fireable substrates, comprising a support base, a decoration-forming layer and a film-forming coating layer,
**characterised in that**
the decoration-forming layer has been produced using a noble metal preparation according to one of claims 1 to 9.

12. Use of the noble metal preparation according to one of claims 1 to 9 for the production of noble metal decorations on decoratively fireable substrates by direct printing or using the transfer according to claim 11 by indirect printing.

## Revendications

1. Préparation à base de métal noble pour la fabrication de décors à base de métal noble sur des substrats capables d'être soumis à une cuisson de décoration, contenant
- un ou plusieurs composés de métal noble de Au, Ag, Pd
ou Pt,
- un milieu, dont le système liant contient une résine de polyamide et une résine de colophane, et
- un ou plusieurs fondants,
**caractérisée par** un système liant formé d'un mélange de résines de :
(a) 25 à 40% en poids d'une ou plusieurs résines de polyamide ;
(b) 5 à 30% en poids d'une ou plusieurs résines récentes à teneur en soufre, en particulier de résine dammar à teneur en soufre,
(c) 20 à 55% en poids d'une ou plusieurs résines modifiées par la colophane ;
(d) 0 à 30% en poids d'une ou plusieurs résines d'alkylphénol ; et
(e) 0 à 30% en poids d'autres résines, excepté les résols non plastifiants ;
ou de produits de réaction formés à 50 à 150°C du mélange de résines cité et/ou de produits de réaction formés à 50 à 150°C en présence d'un agent gélifiant à teneur en soufre du mélange de résines cité contenant les composés de métal noble ou de ses produits de réaction.

2. Préparation à base de métal noble selon la revendication 1,
**caractérisée par le fait**
**que** dans le système liant sont présentes ou bien au moins deux résines différentes, modifiées par la colophane, dans le rapport en poids de 10 à 1 à 1 à 10 ou bien au moins une résine modifiée par la colophane et une résine d'alkylphénol dans le rapport en poids de 10 à 1 à 1 à 1.

3. Préparation à base de métal noble selon l'une des revendications 1 ou 2,
**caractérisée par le fait**
**que** le mélange contenant les composés de métal noble et les résines ou le mélange réactionnel de celles-ci a été gérifié au moyen de 0,1 à 3% en poids, par rapport à la préparation, d'un agent gélifiant à teneur en soufre.

4. Préparation à base de métal noble selon l'une des revendications 1 à 3,
**caractérisée par le fait**
**qu'**elle contient 10 à 40% en poids de solvants ayant un point d'ébullition au-dessus de 110°C de la série des hydrocarbures aromatiques et cycloaliphatiques, en particulier les composés aromatiques alkylés et les terpènes, les cétones, les alcools et les éthers.

5. Préparation à base de métal noble selon l'une des revendications 1 à 4,
**caractérisée par le fait**
**qu'**elle contient 10 à 30% en poids de cires de la série des alcools gras, des amides gras, des cires de polyoléfines et des polyalkylèneglycols, et moins de 10% en poids de solvants organiques.

6. Préparation à base de métal noble selon l'une des revendications 1 à 5,
**caractérisée par le fait**
**qu'**elle contient, comme résine récente à teneur en soufre une résine dammar à teneur en soufre et la(les) résine(s) modifiée(s) par la colophane est (sont) choisie(s) dans la série des esters de glycérol et de pentaérythritol et de colophane ou des esters de glycérol de colophane modifiée par l'acide maléique.

7. Préparation à base de métal noble selon l'une des revendications 1 à 6,
**caractérisée par le fait**
**que** le système liant se compose d'un mélange de résines, 27 à 50% en poids d'une ou plusieurs résines modifiées par la colophane, 7 à 20% en poids de résine dammar à teneur en soufre, 27 à 37% en poids de résine de polyamide et 0 à 30% en poids de résine d'alkylphénol, où, dans un système liant contenant deux résines modifiées par la colophane, ces résines sont présentes dans un rapport en poids allant de 5 à 1 jusqu'à 1 à 5 et, dans un système liant contenant une résine modifiée par la colophane et une résine d'alkylphénol, ces résines sont présentes dans un rapport en poids allant de 4 à 1 jusqu'à 1 à 1, et/ou de produits de réaction, formés en présence ou en l'absence d'un agent gélifiant à teneur en soufre, du mélange de résines cité.

8. Préparation à base de métal noble selon l'une des revendications 1 à 7,
**caractérisée par le fait**
**que** le milieu contenant un ou plusieurs composé(s) de métal noble organiques solubles avant ou après l'addition du/des fondant(s) a été gélifié en présence de 0,1 à 3% en poids, par rapport à la préparation, d'un ou de plusieurs agents gélifiants de la série des sulfénamides, des dithioamides ou d'un autre composé organique par un pont di-, tri- ou tétrasulfure à une température de 50 à 150°C pendant 5 à 90 minutes.

9. Préparation à base de métal noble selon l'une des revendications 1 à 7,
**caractérisée par le fait**
**qu'**il contient comme composés de métal noble des composés de l'or sensiblement solubles de la série des résinates, des sulforésinates, des thiolates et des dithiolates.

10. Procédé de fabrication d'une préparation à base de métal noble telle que définie à l'une des revendications 1 à 9,
comprenant des mélanges d'un ou plusieurs composés de métal noble de Au, Ag, Pd ou Pt avec un milieu comprenant un système liant, contenant du solvant ou sans solvant et contenant un fondant,
**caractérisé par le fait**
**que** l'on utilise un système liant qui se compose d'un mélange de résines de :
(a) 25 à 40% en poids d'une ou plusieurs résines de polyamide ;
(b) 5 à 30% d'une ou plusieurs résines terpéniques à teneur en soufre, en particulier une résine dammar à teneur en soufre ;
(c) 25 à 55% en poids d'une ou plusieurs résines modifiées par la colophane ;
(d) 0 à 30% en poids d'une ou plusieurs résines d'alkylphénol ;
(e) 0 à 30% en poids d'autres résines, excepté les résols non plastifiants,
ou de produits de réaction formés à 50 à 150°C du mélange de résines cité et/ou de produits de réaction formés en présence d'un agent gélifiant à teneur en soufre à 50 à 150°C du mélange de résines cité contenant les composés de métal noble.

11. Décalcomanie pour la fabrication d'un décor de métal noble sur des substrats capables d'être soumis à une cuisson de décoration, comprenant une couche inférieure de support, une couche formant un décor et une couche de revêtement filmogène,
**caractérisée par le fait**
**que** la couche formant un décor a été obtenue avec utilisation d'une préparation à base de métal noble telle que définie à l'une des revendications 1 à 9.

12. Utilisation de la préparation de métal noble telle que définie à l'une des revendications 1 à 9 pour la fabrication de décors à base de métal noble sur des substrats capables de subir une cuisson de décoration par impression directe ou avec utilisation de la décalcomanie telle que définie à la revendication 11 par impression indirecte.
